# EUROPEAN PATENT APPLICATION

(11) **EP 1 298 936 A1**
(43) Date of publication of application: **02.04.2003**
(21) Application number: 01945778.7
(22) Date of filing: 03.07.2001
(51) Int. Cl.: H04N 7/36

(54) **IMAGE DATA DECODER AND IMAGE DATA DECODING METHOD**

(30) Priority: 06.07.2000 JP 2000205414
(71) Applicant: MATSUSHITA ELECTRIC INDUSTRIAL CO., LTD., Kadoma-shi, Osaka 571-8501 (JP)
(72) Inventor: IMURA, Koji, Machida-shi, Tokyo 194-0013 (JP); IDO, Daiji, Kanazawa-ku, Yokohama-shi, Kanagawa 236- (JP); MIYAZAKI, Akihiro, Sakai-shi, Osaka 591-8032 (JP); HATA, Koichi, Katano-shi, Osaka 576-0021 (JP)
(74) Representative: Grünecker, Kinkeldey, Stockmair & Schwanhäusser Anwaltssozietät
(86) International application number: JP0105738
(87) International publication number: WO02005565

(57) **Abstract**

An output controller 104 outputs coded data included in a packet arrived later than reproduction and display timing designated by a timestamp to a decoding section 105 together with coded data included in a packet designated by a timestamp next to the above timestamp. The decoding section 105 first decodes coded data included in the packet arrived later and updates the reproduced image that is one earlier than the above decoded reproduced image to the above decoded reproduced image, then decoding coded data included in the packet arrived before reproduction and display timing designated by the timestamp.

## Description

### Technical Field

The present invention relates to an image data decoding apparatus and image data decoding method, specifically, to an image data decoding apparatus and image data decoding method which are used in an image distribution system that performs decoding and reproducing images while receiving the coded image data.

### Background Art

As a technique for coding an image signal, ISO/IEC 14496 part 2(Visual) (commonly called MPEG-4) which is recommended by International Organization for Standardization (ISO/IEC) is used. MPEG-4 Visual is a multimedia coding system and a technique for coding various kinds of image materials.

The image coding technique can be implemented by three techniques including a motion compensation prediction coding method, discrete cosine transform and variable length code. In those image coding techniques, an amount of motion between a target picture to be coded and one previously coded target picture is evaluated, a difference between a prediction image signal corrected with the amount of motion and the target picture to be coded is calculated, the difference information is transformed to a frequency domain and the resultant is transformed to a variable length code that is called Huffman code using the deviation of the frequency components.

The above three constituent techniques (namely, motion compensation prediction coding method, discrete cosine transform, and variable length code) are applied to each unit of coded blocks (macroblocks) of 16 x 16 pixels into which the picture is partitioned.

Moreover, in MPEG-4, a technique which is called video packet is used as a technique for restraining deterioration of the image quality caused by a transmission error. This is a method in which coded data of a plurality of macroblocks is transmitted as one transmission unit (video packet).

As a video packet structuring method, there is a method in which the amount of generated codes in the macro unit is accumulated and the video packet is structured until the time when this amount of accumulated codes reaches a predetermined amount of codes, as described in Unexamined Japanese Patent Publication No. 08-205155. By structuring the video packet in this way, the video packet can be structured by small number of blocks relating to the parts where the motion is great and the amount of codes is large, and this makes it possible to hold down the range of deterioration in the parts where the motion is great even if an error occurs in the video packet due to the transmission error. Moreover, relating to the parts such as a background where the amount of code is small, the video packet is structured with many macro blocks but deterioration is not conspicuous since there is no motion. Thus, the video packet structure makes it possible to assign the bits to each video packet efficiently.

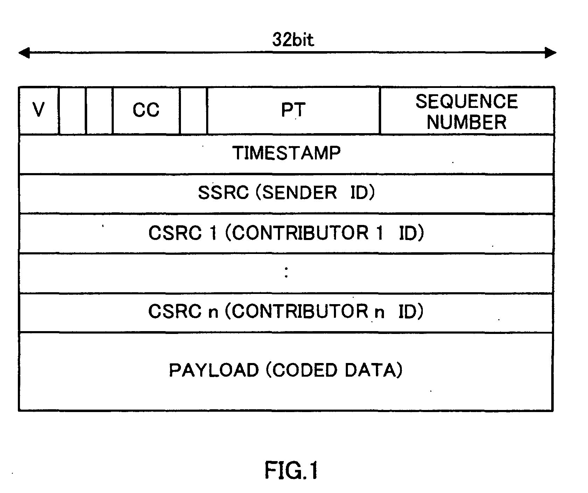

As a transmission/reception protocol for decoding and reproducing data while receiving the coded data, there is an RTP (Real-time Transport Protocol) which is defined by IETF (Internet Engineering Task Force). In RTP, information relating to coded data such as reproduction timing (timestamp) and sequence number are stored in a header portion, so that coded data is stored in a payload portion. FIG.1 is a schematic view illustrating the structure of RTP packet.

In FIG. 1, "V", "CC", "PT", "SSRC" and "CSRC" included in the RTP packet represent RTP version, number of contributors, payload types ( kind of video, audio, etc.), sender's ID and ID of contributor, respectively. The sequence number is a number that is assigned to each RTP packet one by one sequentially, and the timestamp denotes reproduction timing of coded data (i.e., image display timing).

More specifically, for example, consider the case where one picture is divided into five RTP packets and transmitted, the same time information (reproduction and display timing of the corresponding picture) is stored in the timestamp of each RTP stamp, and 1 to 5 are assigned to the parts of the sequence number in ascending order. A receiving side detects the loss of coded data during transmission using the sequence number, and decodes and reproduces coded data stored in the payload according to the timestamp.

However, when coding data is transmitted by RTP, , depending on the transmission path condition, the RTP packet may not arrive a receiving side before the timing designed by the timestamp.

In this case, it is possible to consider a method in which coded data is reproduced using only RTP packet arrived before designated timing rather than using RTP packet arrived the receiving side later than the designated timing. However, such method has a problem in that the quality of reproduced image is deteriorated by the lost information.

Moreover, in image coding method, the reproduction of picture is sequentially performed using difference information with respect to one previous picture and this causes a problem in which when deterioration once occurs in the image quality of a certain picture, deterioration of the image quality is transmitted to all pictures to be reproduced afterward.

Still moreover, there is considered a method in which reproduction timing is delayed a little when the RTP packet does not arrive at the receiving side before timestamp designed timing, so that coded data is reproduced after all RTP packets stored in the same stamp arrive. However, the image reproduced by this method has a problem in that a smooth motion cannot be reproduced.

### Disclosure of Invention

It is an object of the present invention to provide an image data decoding apparatus and an image data decoding method that can prevent the deterioration of image quality from being sent to a next reproduced image and afterward, and reproduce a smooth motion even when a packet is not arrived before a timestamp designated timing.

In order to achieve the aforementioned object, the present invention decodes image data arrived later than reproduction and display timing represented by time information before reproduction and display timing of next image data, and compensates for a lost part of image data in the reproduced image using the decoded image so as to prevent deterioration of image quality from being sent to a next reproduced image and afterward.

### Brief Description of Drawings

FIG. 1 is a schematic view illustrating the structure of a RTP packet;
FIG. 2 is a principal part block diagram illustrating the schematic configuration of a radio communication terminal apparatus having an image data decoding apparatus according to the embodiment of the present invention;
FIG. 3 is a principal part block diagram illustrating the schematic configuration of an output controller of the image data decoding apparatus according to the embodiment of the present invention;
FIG. 4 is a principal part block diagram illustrating the schematic configuration of a decoding section of the image data decoding apparatus according to the embodiment of the present invention;
FIG. 5 is a view explaining the operations of the image data decoding apparatus according to the embodiment of the present invention; and
FIG. 6 is a view explaining the operations of the image data decoding apparatus according to the embodiment of the present invention.

### Best Mode for Carrying Out the Invention

The following will specifically explain the embodiment of the present invention with reference to the drawings accompanying herewith.

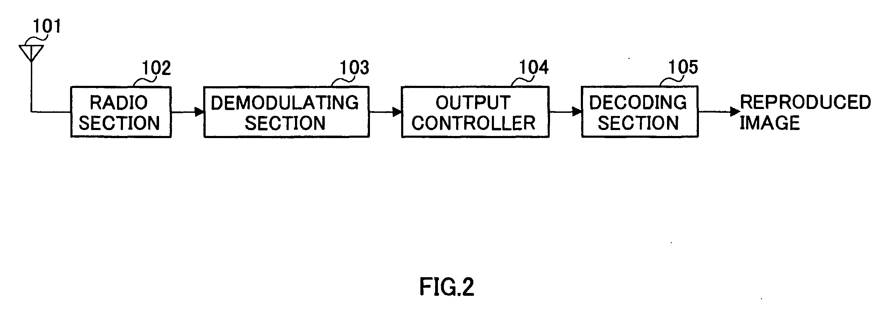

FIG. 2 is a principal part block diagram illustrating the schematic configuration of a radio communication terminal apparatus having an image data decoding apparatus according to the embodiment of the present invention. In the radio communication terminal apparatus, a part that is composed of an output controller 104 and a decoding section 105 corresponds to the image data decoding apparatus according to this embodiment.

In FIG. 2, a radio section 102 provides predetermined radio processing to coded data included in a packet received via an antenna 101, and the demodulating section 103 provides predetermined demodulating processing to coded data subjected to radio processing.

The output controller 104 controls coded data to be outputted to the decoding section 105 according to the timestamp of coded data received from the demodulating section 103. Specifically, the output controller 104 controls both, the outputting of coded data included in the packet arrived later than reproduction and display timing designated by the timestamp to the decoding section 105 and the outputting of coded data included in the packet designated by a timestamp next to the aforementioned timestamp. The configuration of output controller 104 will be explained later.

The decoding section 105 decodes the coded data outputted from the output controller 104. When the coded data of the *n*-th picture arrived later than the reproduction and display timing of the *n*-th picture presented in the coded data which is outputted from the output controller 104, the decoding section 105 first decodes the coded data of the *n*-th picture arrived later, and updates an image decoded and produced already with the reproduction and display timing of the *n*-th picture using the decoded and reproduced image firstly decoded, thereafter decoding coded data of an (*n*+1)-th picture arrived before the reproduction and display timing of the (*n*+1)-th picture.

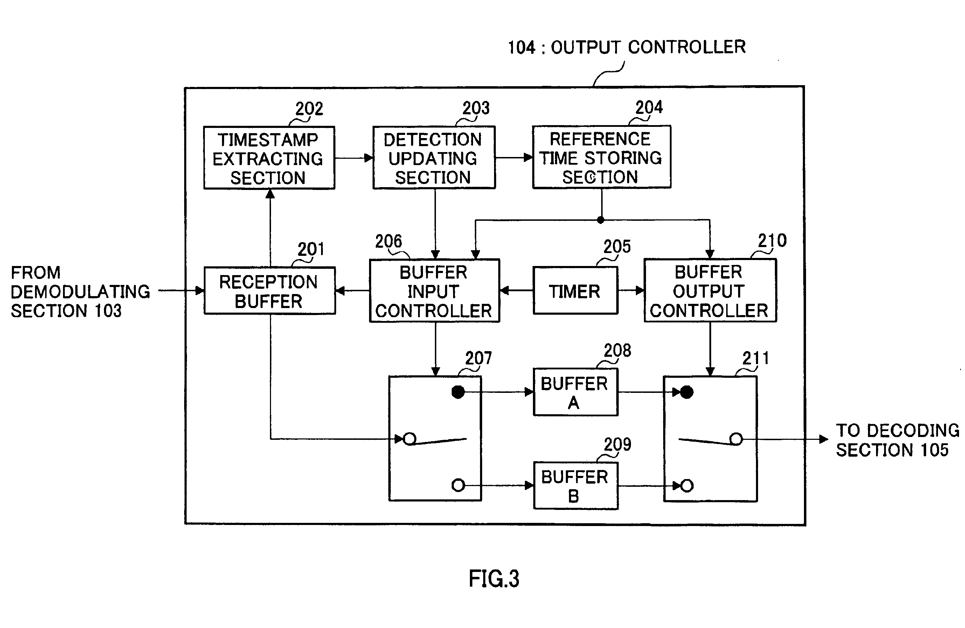

An explanation of the configuration of output controller 104 is given below. FIG. 3 is a principal part block diagram illustrating the schematic configuration of the output controller of the image data decoding apparatus according to the embodiment of the present invention. In FIG. 3, coded data outputted from the demodulating section 103 is temporarily stored in a reception buffer 201 and timestamps are extracted by a timestamp extracting section 202. The extracted timestamps are sequentially outputted to a detection updating section 203, and the detection updating section 203 compares a timestamp currently outputted with a timestamp previously outputted so as to detect the change in the timestamp.

When the change in timestamp is detected, the detection updating section 203 notifies a buffer input controller 206 of the detection, and updates reference times Tc and Tp which are stored in a reference time storing section 204, where, the reference time Tc denotes reproduction and display timing shown by the latest timestamp and reference time Tp denotes reproduction and display timing shown by the one previous timestamp of the latest time stamp.

The buffer input controller 206 performs switch control of a switch 207 based on reference times Tc and Tp stored in the reference time storing section 204 and current time Td shown by a timer 205, thereby distributing the coded data stored in the reception buffer 201 to a buffer A 208 and a buffer B 209 appropriately to be stored therein. A specific distributing method will be described later.

A buffer output controller 210 performs switch control of a switch 211 based on reference times Tc and Tp stored in the reference time storing section 204 and current time Td shown by the timer 205, thereby outputting coded data stored in the buffer A 208 or buffer B 209 to the decoding section 105.

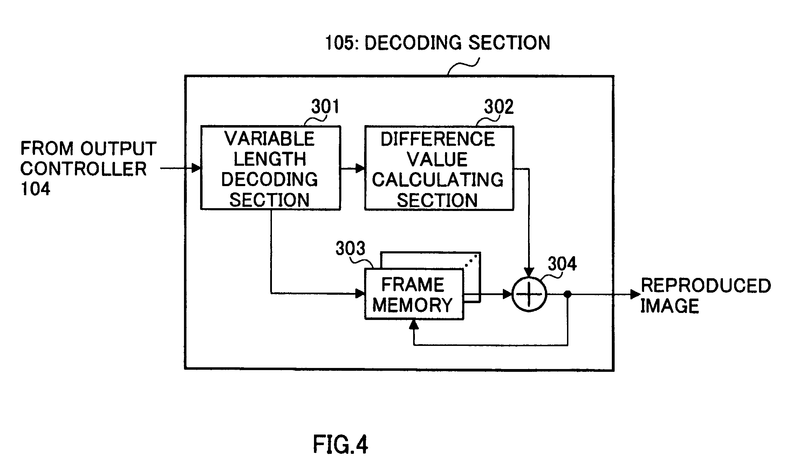

Next, an explanation of the configuration of the decoding section 105 is given. FIG. 4 is a principal part block diagram illustrating the schematic configuration of the decoding section of the image data decoding apparatus according to the embodiment of the present invention. In FIG. 4, coded data outputted from the output controlling section 104 is decoded by a variable length decoding section 301. Since coded data is coded by the variable length coding method, the difference information and amount of motion are reproduced as a result of the decoding at the variable length decoding section 301. The variable length decoding section 301 outputs the difference information to a difference value calculating section 302 so as to correct the image stored in frame memory 303 with the amount of motion. The image corrected with the amount of motion is outputted to an adding section 304.

The difference value calculating section 302 provides inverse discrete cosine transform and dequantization processing to difference information outputted from the variable length decoding section 301 to calculate a difference value, and outputs the resultant to the adding section 304. The adding section 304 adds the image corrected according to the amount of motion and the difference value so as to obtain a reproduced image. This reproduced image is stored in the frame memory 303 to predict a next picture.

An operational explanation of the image data decoding apparatus having the aforementioned configuration is given below.

First, an explanation of the operational relationship among reference times Tc and Tp stored in the reference time storing section 204, current time Td measured by the timer 205, detection updating section 203, buffer input controller 206 and buffer output controller 210 will be given.

When current time Td reaches reference time Tp (i.e., at the time of Td=Tp), the buffer output controller 210 controls the switch 211 such that coded data is output to the decoding section 105 from the buffer which is different from the buffer where current coded data is input. More specifically referring to Fig. 3, for instance, when the buffer where current coded data is inputted from the reception buffer 201 is the buffer A 208, the buffer output controller 210 connects the switch 211 to the buffer B 209 at the time of Td=Tp and connects the buffer B 209 to the decoding section 105.

Moreover, when current time Td reaches reference time Tc (i.e., at the time of Td=Tc), the buffer output controller 210 controls the switch 211 such that coded data is output to the decoding section 105 from the buffer where current coded data is input. Again referring to Fig. 3, for instance, when the buffer where current coded data is inputted from the reception buffer 201 is the buffer A 208, the buffer output controller 210 connects the switch 211 to the buffer A 208 at the time of Td=Tc and connects the buffer A 208 to the decoding section 105.

On the other hand, every time when Td=Tc, the buffer in-put controller 206 controls the switch to the buffer wherein coded data is input. More specifically, when the buffer where current coded data is inputted from the reception buffer 201 is the buffer A 208, the buffer input controller 206 connects the switch 207 to the buffer B 209 after Td=Tc, therefor, connects the reception buffer 201 to buffer B 209.

Moreover, as long as the change in the timestamp is detected by the detection updating section 203, the buffer input controller 206 switches the buffer to which coded data is input if Tp<Td<Tc.

Still moreover, as long as the change in the timestamp is detected by the detection updating section 203, Tp stored in the reference time storing section 204 is updated to Tc, and Tc is updated with the latest timestamp.

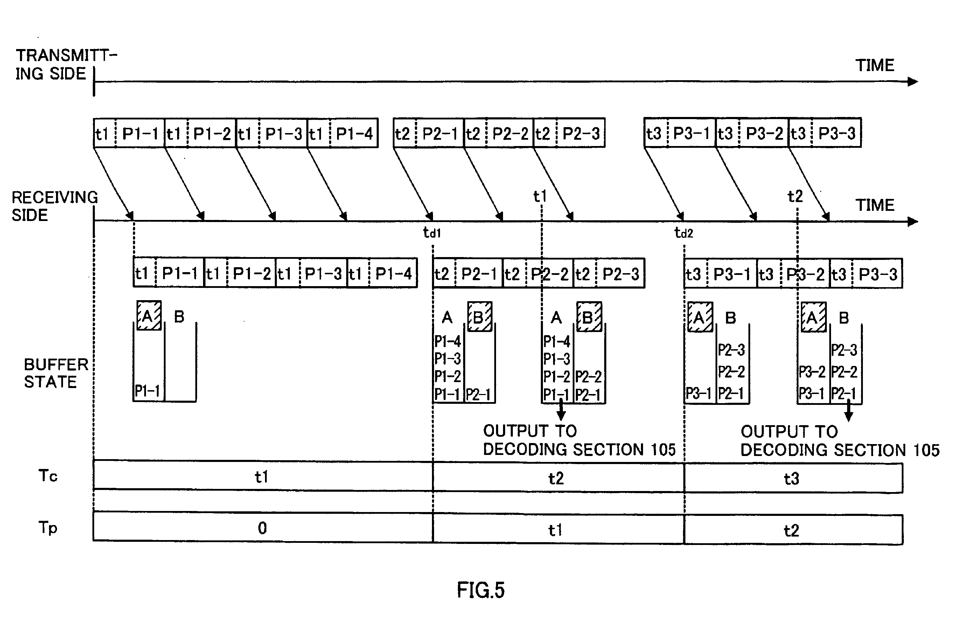

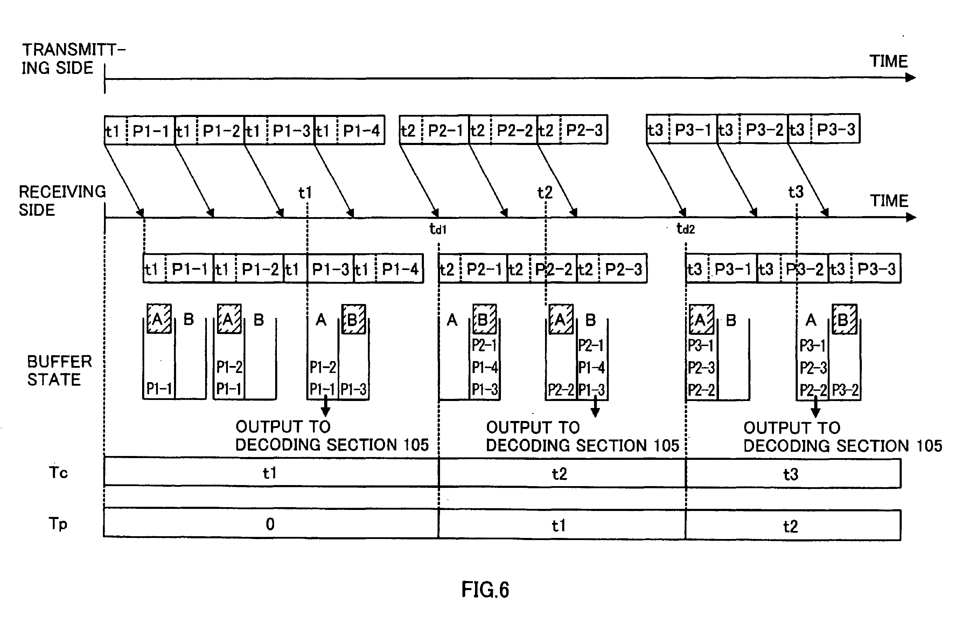

The following will specifically explain the operations of the image data decoding apparatus according to this embodiment to be associated with the reproduction and display timing shown by timestamp. FIGS. 5 and 6 are views explaining the operations of the image data decoding apparatus according to the embodiment of the present invention. Additionally, in FIGS. 5 and 6, t1 to t3 show the respective timestamps, and P1-1 to P3-3 show coded data that is stored in each packet. That is, for example, P1-1 to P1-4 show the respective coded data obtained when the image data to be reproduced with timing t1 is divided into four partitions.

Furthermore, the buffer states shown in FIG. 5 and the buffer states shown in FIG. 6 indicate the two buffer contents along with passage of time, and a diagonally shaded buffer is a target buffer where current coded data is input in.

First, an explanation will be given with reference to FIG. 5. FIG. 5 shows the case in which all packets arrive at the receiving side (namely, the image data decoding apparatus of this embodiment) before reproduction and displaying timing shown by the timestamp.

As illustrated in FIG. 5, the packets transmitted from the transmitting side arrive at the image data decoding apparatus according to this embodiment with a delayed timing from a certain transmitting time.

When the first coded data P1-1 is input to the reception buffer 201, the timestamp extracting section 202 extracts timestamp t1 and outputs it to the detection updating section 203. Then, the detection updating section 203 sets Tp and Tc stored in the reference time storing section 204 to Tp=0 and Tc=t1, respectively, as shown in FIG. 5.

Next, the buffer input controller 206 connects the switch 207 to the buffer A 208 and outputs coded data P1-1 which is stored in the reception buffer 201 to the buffer A 208. This operation stores coded data P1-1 in the buffer A 208 as illustrated in FIG. 5. Afterward, the buffer input controller 206 connects the switch 207 to the buffer A 208 until a change in the timestamp is detected by the detection updating section 203, so that coded data stored in the reception buffer 201 is outputted to the buffer A 208. Accordingly, as illustrated in FIG. 5, coded data P1-1 to P1-4 is sequentially stored in the buffer A 208.

Next, when coded data P2-1 is input to the reception buffer 201, the timestamp extracting section 202 extracts timestamp t2 and outputs it to the detection updating section 203. Then, the detection updating section 203 compares timestamp t2 currently outputted with timestamp t1 previously outputted so as to detect that the timestamp has been changed from t1 to t2 at time t_{d1}.

Since t_{d1} is established such that Tp<t_{d1}<Tc, the buffer input controller 206 switches the buffer to which coded data is to be input from the buffer A 208 to the buffer B 209. In other words, the buffer input controller 206 connects the switch 207 to the buffer B 209 until time t_{d2} when a next change in the timestamp is detected by the detection updating section 203, so that coded data stored in the reception buffer 201 is outputted to the buffer B 209. Accordingly, as illustrated in FIG. 5, coded data P2-1 to P2-3 is sequentially stored in the buffer B 209.

Moreover, when it is detected that the timestamp is changed from t1 to t2 at time t_{d1}, the detection updating section 203 updates Tp and Tc to t1 and t2, respectively, as illustrated in FIG. 5.

Then, when current time Td reaches Tp (namely, when time t1 at which coded data of timestamp t1 is reproduced), the buffer output controller 210 controls the switch 211 such that coded data stored in the buffer A 208 which is different from the data stored in the buffer B 209 that contains current coded data is outputted to the decoding section 105. In other words, the buffer output controller 210 connects the switch 211 to the buffer A 208 at time t1 and outputs coded data P1-1 to P1-4 to the decoding section 105 from the buffer A208 at the same time as illustrated in FIG. 5.

Afterward, the similar processing is repeated and when next current time Td reaches Tp (namely, time t2 at which coded data of timestamp t2 is reproduced), the buffer output controller 210 connects the switch 211 to the buffer B 209 at time t2 and outputs coded data P2-1 to P2-3 to the decoding section 105 from the buffer B 209 at the same time as illustrated in FIG. 5.

Therefor, when all packets arrive at the receiving side before reproduction and displaying timing shown by the timestamp, the image data decoding apparatus according to the present invention can reproduce an image having no lost information with reproduction and displaying timing.

Referring to FIG. 6, an explanation will be given below. FIG. 6 shows the case in which the packet arrives the receiving side (namely, the image data decoding apparatus of this embodiment) later than reproduction and displaying timing shown by the timestamp.

As illustrated in FIG. 6, the packet transmitted from the transmitting side arrives at the image data decoding apparatus according to this embodiment with a delay timing from a certain transmitting time.

When the first coded data P1-1 is input to the reception buffer 201, Tp=0 and Tc=t1 are set as illustrated in FIG. 6 similar to the aforementioned case explained in FIG. 5.

Moreover, the buffer input controller 206 connects the switch 207 to the buffer A 208 so as to output coded data P1-1that is stored in the reception buffer 201 to the buffer A 208. This operation stores the coded data P1-1 in the buffer A 208 as illustrated in FIG. 6. Afterward, the buffer input controller 206 connects the switch 207 to the buffer A 208 until Td=Tc is established, so that coded data stored in the reception buffer 201 is outputted to the buffer A 208. Accordingly, as illustrated in FIG. 6, coded data P1-1 and P1-2 are sequentially stored in the buffer A 208.

Then, when current time Td reaches Tc (namely, time t1 at which coded data of timestamp t1 is reproduced), the buffer output controller 210 controls the switch 211 such that coded data stored in the buffer A 208 where current coded data is input is outputted to the decoding section 105. In other words, the buffer output controller 210 connects the switch 211 to the buffer A 208 at time t1 and outputs coded data P1-1 and P2-1 to the decoding section 105 from the buffer A 209 at the same time as illustrated in FIG. 6.

Moreover, when current time Td reaches Tc, the buffer input controller 206 switches the buffer to which coded data is to be input from the buffer A 208 to the buffer B 209. Accordingly, coded data P1-3 and P1-4 are stored in the buffer B 209 as shown in FIG. 6.

Sequentially, when coded data P2-1 is input to the reception buffer 201, the detection updating section 203 compares timestamp t2 currently outputted with timestamp t1 previously outputted similar to the case explained FIG. 4, whereby detecting that the timestamp has been changed from t1 to t2 at time t_{d1}.

However, since t_{d1} is established such that Tc<t_{d1} as the case shown in FIG. 6 (i.e., it is not the case where Tp<t_{d1}<Tc), the buffer input controller 206 does not switch the buffer to which coded data is to be input, and only the updates of Tp and Tc are performed in the detection updating section 203 similar to the case explained in FIG. 5.

Accordingly, coded data outputted from the reception buffer 201 are sequentially stored in the buffer B 209 until next current time Td reaches Tc. Namely, as shown in FIG. 6, coded data P1-3, P1-4, and P2-1 are all stored in the buffer B 209.

Then, when current time Td reaches Tc (namely, time t2 at which coded data of timestamp t2 is reproduced), the buffer output controller 210 controls the switch 211 such that the coded data stored in the buffer B 209that is different from the coded data stored in buffer A 208 where current coded data is inputted is output to the decoding section 105.

In other words, the buffer output controller 210 connects the switch 211 to the buffer B 209 at time t2 and outputs coded data P1-3, P1-4, an P2-1 to the decoding section 105 from the buffer B 209 at the same time as illustrated in FIG. 6. That is, at time t2, coded data P1-3 and P1-4 arrived later than reproduction and display timing shown by the timestamp are added and outputted to the decoding section 105 before coded data P2-1 arrived prior to reproduction and display timing shown by the timestamp.

Then, the decoding section 105 decodes coded data P1-3 and P1-4 arrived later than reproduction and display timing shown by the timestamp before decoding coded data P2-1 arrived prior to reproduction and display timing shown by the timestamp. Accordingly, the decoding section 105 decodes coded data P2-1 after updating the picture of timestamp t1 which has been already reproduced from coded data P-1 and P-2 at time t1 and stored in the frame memory 303, where the updating of the picture of timestamp t1 is based on a difference value calculated from the decoded P1-3 and P1-4.

Such operation compensates for the parts correspond to the lost coded data P1-3 and P1-4 at time t1 on the picture of timestamp t1, making it possible to prevent deterioration of image quality from being sent to the picture to be reproduced at timestamp t2 and afterward.

Afterward, the similar processing is repeated, at time t3 as shown in FIG. 6, coded data P2-2 and P2-3 arrived later than the reproduction and display timing shown by the timestamp are added and outputted to the decoding section 105 before coded data P3-1 arrived prior to reproduction and display timing shown by the timestamp.

When the change in the timestamp is detected by the detection updating section 203 and Td<Tp is established (that is to say, when coded data which is not yet decoded is left in both buffers A 208 and B 209), the buffer input controller 206 sends a stop signal which indicates the stop of data input to the reception buffer 201 so as to prohibit further input of coded data in both buffers A 208 and B 209. Therefor, makes it possible to prevent occurrence of buffer overflow.

According to the present embodiment, coded data arrived later than the reproduction and display timing shown by the timestamp is added and outputted to the decoding section before coded data arrived prior to reproduction and display timing shown by the timestamp. That is, before decoding coded data that is arrived prior to reproduction and display timing shown by the timestamp, the decoding section can update the picture which has been already reproduced by decoding coded data arrived later than reproduction and display timing shown by the timestamp and stored in the frame memory based on a difference value calculated from the decoded data arrived later than reproduction and display timing shown by the timestamp. Therefor, makes it possible to prevent deterioration of image quality from being sent to the picture to be reproduced afterward, and also possible to reproduce a visible image.

The aforementioned embodiment explained, as an example, the case in which the image data decoding apparatus is provided in the radio communication terminal apparatus. However, the present invention is not limited to this and it is possible to provide the image data decoding apparatus to a communication terminal apparatus used in a cable communication system.

Moreover, decoding of image data according to the above embodiment was explained as an image data decoding apparatus. However, decoding of this image data can be implemented by software. That is to say, a program that performs decoding of the aforementioned image data is stored in ROM in advance so that the program may be operated by CPU. Furthermore, the program that performs decoding of the aforementioned image data is stored in a computer-readable storage medium and the program stored in the storage medium is recorded on RAM of the computer, so that the computer may be operated according to the program. In such a case, the same function and effect as those of the aforementioned embodiment can be presented.

According to the present invention and referring to the aforementioned explanation, it is possible to prevent the deterioration of image quality from being sent to a next reproduced image and afterward and to reproduce a smooth motion even if a packet is not arrived before reproduction and display timing designated by a timestamp.

The present application is based on the prior Japanese Patent Application No. 2000-205414 filed on July 6, 2000. The entire contents of which are expressly incorporated by reference herein.

### Industrial Applicability

The present invention can be used in a communication terminal apparatus, particularly to a radio communication terminal apparatus.

## Claims

1. An image data decoding apparatus that reproduces images sequentially using information of a difference between images, said image data decoding apparatus comprising:
a receiver for receiving first image data included in a first image reproduced with first display timing and second image data included in a second image reproduced with second display timing which is later than said first display timing; and
a decoding controller for reproducing said second image with said second display timing according to information of difference between said first image and said second image, after reproducing said first image before said second display timing by use of the first image data received later than said first display timing.

2. The image data decoding apparatus according to claim 1, wherein said decoding controller updates the first image that is reproduced with said first display timing using only first image data received before the first display timing to the first image reproduced before the second display timing using the first image data received later than said first display timing.

3. A communication terminal apparatus provided by an image data decoding apparatus, said image data decoding apparatus comprising:
a receiver for receiving first image data included in a first image reproduced with first display timing and second image data included in a second image reproduced with second display timing which is later than said first display timing; and
a decoding controller for reproducing said second image with said second display timing according to information of difference between said first image and said second image, after reproducing said first image before said second display timing by use of the first image data received later than said first display timing.

4. An image data decoding method that reproduces images sequentially using information of a difference between images, said image data decoding method comprising:
a receiving step of receiving first image data included in a first image reproduced with first display timing and second image data included in a second image reproduced with second display timing which is later than said first display timing; and
a decoding controlling step of reproducing said second image with said second display timing according to information of difference between said first image and said second image, after reproducing said first image before said second display timing by use of the first image data received later than said first display timing.

5. The image data decoding method according to claim 4, wherein in said decoding controlling step, the first image that is reproduced with said first display timing using only first image data received before the first display timing is updated to the first image reproduced before the second display timing using first image data received later than said first display timing.

6. An image data decoding program that reproduces images sequentially using information of a difference between images, said image data decoding program comprising:
a receiving step of receiving first image data included in a first image reproduced with first display timing and second image data included in a second image reproduced with second display timing which is later than said first display timing; and
a decoding controlling step of reproducing said second image with said second display timing according to information of difference between said first image and said second image, after reproducing said first image before said second display timing by use of the first image data received later than said first display timing.

7. The image data decoding program according to claim 6, wherein in said decoding controlling step, there is stored an image data decoding program for updating the first image that is reproduced with said first display timing using only first image data received before the first display timing to the first image reproduced before the second display timing using first image data received later than said first display timing.
